# EUROPEAN PATENT SPECIFICATION

(11) **EP 1 442 546 B1**
(45) Date of publication and mention of the grant of the patent: **16.08.2006**
(21) Application number: 02801412.4
(22) Date of filing: 15.10.2002
(51) Int. Cl.: H04J 11/00

(54) **OVSF CODE GENERATION**
OVSF-CODEERZEUGUNG
PRODUCTION DE CODE OVSF

(30) Priority: 15.10.2001 GB 0124720
(43) Date of publication of application: 04.08.2004
(73) Proprietor: UbiNetics (VPT) Limited, Melbourn Hertfordshire SG8 6DP (GB)
(72) Inventor: LARKIN, Robert, Cambridge CB4 1JT (GB)
(74) Representative: Wright, Howard Hugh Burnby
(86) International application number: PCT/GB2002/004676
(87) International publication number: WO 2003/034628

(56) References cited:
- WO-A-00/22744
- WO-A-01/58070

## Description

The present invention relates to the creation and use of orthogonal variable spreading factor (OVSF) codes and their subsequent decoding.

In a data transmission system, such as in a universal mobile telephone system (UMTS), it is important to be able to transmit multiple channels of data through a single channel. It is known to multiplex these channels of data through the single channel by arranging the data to be transmitted in time slots whereby each of the multiple channels is transmitted in pieces during set time slots within frames.

Alternatively, each of the channels can be mathematically convolved with OVSF codes. Since each of these codes is orthogonal to each of the others, during decoding, if the correct OVSF code is used, only the channel which has been convolved with that OVSF code will result. Currently, as many as 512 signals can be transmitted, each convolved with its own OVSF code.

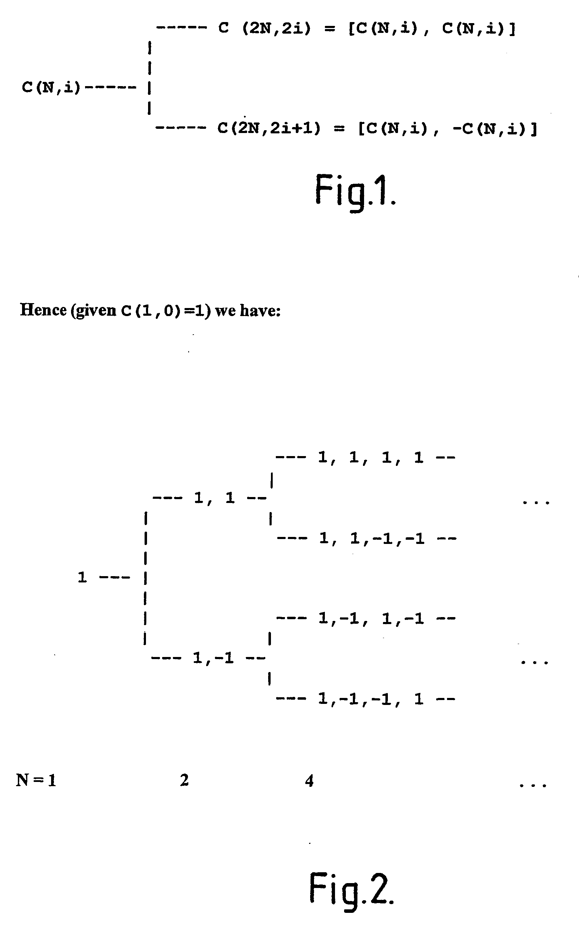

Each OVSF code used in the universal mobile telephone system is structured to sit on a code tree arranged as shown in Figure 1. From Figure 1, it will be seen that the code is a function of both the number of bits in the code (N) and the position on the code tree. Thus, as will be seen from Figure 2, if the code at the root of the tree is 1 (C (1,0) = 1), the values in Figure 2 are generated. At the first branching of the tree (N=2), the upper branch repeats the root code giving (1, 1), and the lower branch repeats the root branch but inverted giving (1, -1). Following the upper branch, this subsequently branches again (N = 4) so as to repeat the first branch (1, 1, 1, 1) for the upper branch and to repeat the previous code but inverted (1, 1, -1, -1) for the lower branch.

From the lower of the two-bit codes (1, -1), if the upper branch is taken, the previous code is repeated to give (1, -1, 1, -1), whereas if the lower branch is taken it is repeated inverted (1, -1, -1, 1). Thus, any code can be looked at in two parts, the first half being identical to the preceding branch and the second half being either identical to or an inverted copy of the preceding code.

This ensures that each code on the tree is a copy of the code on the preceding branch, repeated twice (hence double the length). The second repetition will be inverted if the new code is on the lower branch.

According to the prior art, each of the OVSF codes must be held in memory. This means that a memory of considerable size is required in order to hold all of the codes so that any transmission can be received, as required. For example, where N = 2, the number of bits to be held are N²=4, where N = 4, it is N⁴=16, and where N = 8, it is N⁸=64. Clearly the number of bits increases very quickly as N increases, and the memory requirement is very significant.

WO 00/22744 discloses a method and generator for generating orthogonal spreading code in CDMA radio systems. The method comprises obtaining control data (the length, the running number and the code class of the spreading code) and forming a modified code number by reversing the code number. The operation is repeated for each chip of the spreading code.

WO 01/58070 discloses a code word generator for OVSF codes comprising an intermediate memory device which is used to input a calculation index as a binary calculation data word, a calculation device which permutes the significant data bits of the calculation index data word bit-by-bit so that a calculation basis can be generated, a counter for producing a counting variable and provided with a logic circuit comprising several AND gates for bit-by-bit linkage of the counting variables generated with the calculation basis in order to form a linking data word and several XOR gates for logical reduction of the linking data word to form code word data bits of the OVSF code word.

According to the present invention a telecommunications device is arranged to receive and decode telecommunications signals encoded with OVSF codes comprising an OVSF code generator for generating OVSF codes, the code generator including: a register having an input and two outputs, and having N/2 spaces, where N is the maximum number of bits of an OVSF code; an exclusive OR gate arranged to receive OVSF code bits from the register; and a serial multiplexor disposed between the output of the register and the input of the exclusive OR gate. This allows for a reduction in the resources required within the device since it is not necessary to hold all of the OVSF codes in memory against a future time when they might be needed. This also gives the advantage that effectively only a half sized register is required.

The code generator preferably includes a controller connected to an input of the exclusive OR gate, and it is further preferred that it also controls the multiplexor.

An advantage is obtained by storing N/2 bits of the OVSF code in the register, where N is the number of bits of the OVSF code.

According to a second aspect of the invention, a method of generating OVSF codes comprises creating an initial condition in which a root value is located in a register as the least significant bit; controlling an exclusive OR gate to either feed the contents of the register back into the input of the register, or invert the contents of the register and feed it back into the input of the register; storing N/2 bits of the OVSF code in the register, where N is the number of bits of the OVSF code; and controlling a multiplexor to serially feed the contents of the register back to the exclusive OR gate. Again, this results in the OVSF code being generated rather than held in memory, with the advantages explained above.

In one arrangement, the invention further includes the controlling of the multiplexor to first feed back a one-bit word, then a two-bit word, then a four-bit word etc. until the appropriate OVSF code has been generated.

According to the present invention, much less memory is required since the codes do not need to be held in memory, but can be generated very easily. This, of course, simplifies the apparatus required and makes it cheaper.

The present invention will now be described by way of example only and with reference to the accompanying figures in which
Figure 1 shows the basic code tree structure;
Figure 2 shows an enlarged code tree structure in which C (1,0) = 1;
Figure 3 shows another OVSF code tree in which code 0100 is selected; and
Figure 4 shows an OVSF code generator according to the invention.

The present invention uses exactly the same OVSF codes as the prior art. However, rather than holding the codes in memory, thereby consuming valuable resources, the present invention generates the code within the device itself. This requires less resources, since only one small part of the code tree needs to be generated. It has already been explained above how it is known to position the OVSF codes in a tree structure. The number of bits in the code gets longer the further into the tree you go, and the further you get from N = 1. In fact, the length of the code doubles with each branching away from the root.

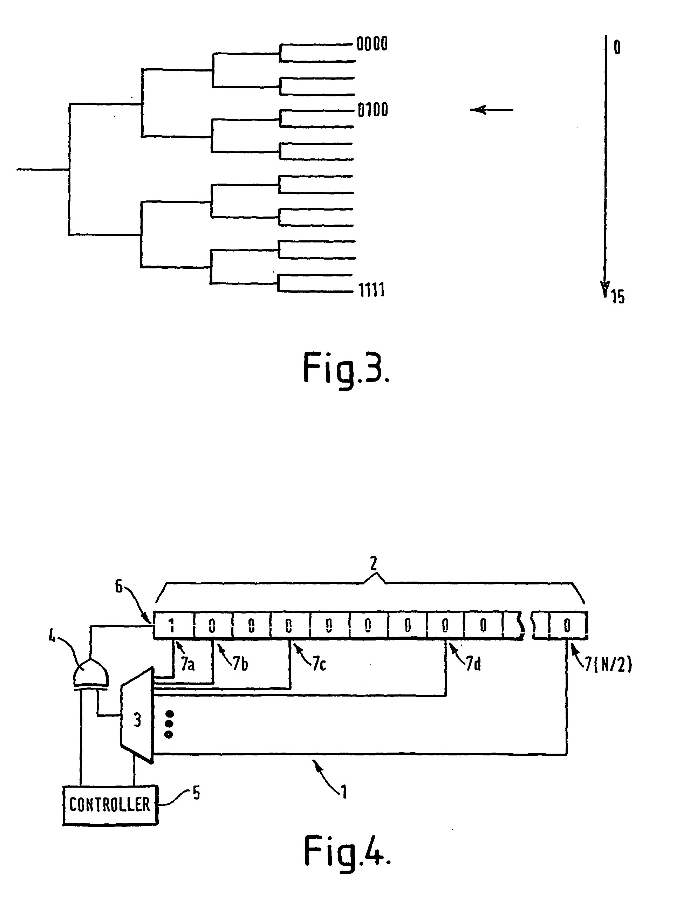

In this invention, the OVSF code is generated as required, rather than being held in memory against the time when it might be used. The OVSF code is generated using a code generator as shown in Figure 4. The generator 1 uses an N/2 register 2. The generator also includes a multiplexor 3, an exclusive OR gate 4 and a controller 5. The register 2 has an input 6 into which numbers are fed and a number of outputs 7a, 7b, 7c ...7(N/2). The outputs 7a to 7(N/2) are fed into the multiplexor 3, the output of which is directed to one of the inputs of the exclusive OR gate 4. The controller 5 has two output lines, one leading to the other input of the exclusive OR gate 4 and the other leading to the multiplexor 3 so as to control its output. The output of the exclusive OR gate leads to the input of the register 2.

The numbers in the register 2 in Figure 4 represent the required initial conditions. This corresponds to the root position on the code tree in Figure 3 where the root code is 1. The register 2 is of length N/2, where N is the number of bits of the OVSF code to be produced. The multiplexor 3 selects data from either position 1, 2, 4, 8, 16, ..., N/2 (output position 7a, 7b, 7c, 7d, 7e, ..., 7(N/2)). The least significant bit is on the left.

The multiplexor 3 is controlled to select a different output, 7a, 7b, ... 7(N/2) according to the branch of the code tree in order to allow the generated OVSF code to populate the register. The result from the multiplexor 3 is fed serially back into the input 6 of the register 2 in order to repeat the OVSF code from the previous branch. However, before it reaches the input 6 to the register 2, it passes through the exclusive OR gate 4 which can be used to invert the shift register sequence as it is fed back into the register 2.

By way of example, we can trace a path through the tree shown in Figure 3 using the generator 1 shown in Figure 4. The initial condition leaves the register 2 holding the number 1000000 ..., with the least significant bit at the left hand end. This represents the root position on the tree. If, for example, the spreading factor of the OVSF code (sf = 16) is identified by the index "0100" (C(16,4)), the binary form of this index describes the path taken through the tree shown in bold in Figure 3, and hence these bits are used by the exclusive OR gate 4 to invert the shift register sequence as it is fed back into the register 2. Therefore, we start by taking the upper branch for N = 2. To achieve this, the controller 5 controls the multiplexor 3 to use register output 7a and feeds the value "0" to one of the inputs of the exclusive OR gate 4. Since the index is 0, the upper branch is taken whereby the value from the multiplexor 3 is not inverted by the exclusive OR gate 4 and so another "1" is fed into the input 6 to the register 2. The "1" which was previously the least significant bit moves one place to the right in the register 2 to make space for the new bit from the exclusive OR gate. Thus, the register 2 now holds the number 110000...

The next bit in the index is a one. This will cause an inversion of the next part of the OVSF code, and so the controller 5 will apply a "1" to the exclusive OR gate 4, thereby inverting any inputs from the multiplexor 3. Since we have moved to the next branch, the multiplexor 3 will take its input from the output 7b of the register. It will start by taking the "1" from the second position in the register and feeding it into the exclusive gate, where it is inverted to feed a 0 back into the input 6 of the register 2, and the previous bits in the register move one place to the right. The "1" which was the least significant bit now moves to the second place in the register 2, and is fed through the multiplexor 3 and the exclusive OR gate 4 to create another zero which enters the register 2. Again all of the earlier bits move up one place in the register. The register will now read 00110000..., which is the next OVSF code.

The subsequent index is 0, which will cause the controller to apply a "0" to one of the inputs to the exclusive OR gate 4. This will allow the multiplexor 3 to feed the four numbers serially from output 7c of the register through to the input 6 of the register 2 without them being inverted, causing the register to read 00110011. This is equivalent to taking the next upper branch in the tree.

The last branching of the tree is represented by another zero in the index, again meaning that the code does not invert. Once the full code is placed in the register, this can be fed out serially so that it can be used to decode the incoming signal. In fact, there will normally be a maximum size to the OVSF code dictated by the number of branches in from the root code. The register 2 does not need to be able to hold every bit of the OVSF code. It only needs to be able to hold one half of the largest OVSF code which will be used. This is because, when the OVSF code is output, the second half will be either identical to the first half, or an inverted version of the first half, and so as the OVSF code is output through output 7(N/2). The exclusive OR gate 4 and multiplexor 3 can simply generate the last half as the OVSF code is taken from the register 2. Thus, the register only needs to be half of the length of the largest OVSF code.

The controller 5 controls the multiplexor 3 in ascending steps of time corresponding to the branches of the code tree. Thus it is controlled to use the output 7a for one unit of time, to use output 7b for two units of time, to use output 7c for four units of time and so on. The controller 5 also controls the exclusive OR gate for the same periods of time, either allowing a complete repeat of the OVSF code from the previous branch, or a complete inversion of that code. Whether or not the exclusive OR gate 4 is controlled to repeat or invert depends on the index for the target code.

The result of this invention is, firstly, the codes can be generated in situ, without holding them in memory taking up valuable resources. Therefore, devices which incorporate this invention will not require a great deal of memory. Secondly, the register can be arranged to be one half of the full length of the longest OVSF code.

## Claims

1. A telecommunications device arranged to receive and decode telecommunications signals encoded with OVSF codes comprising an OVSF code generator (1) for generating OVSF codes, the code generator (1) **characterized in that** it includes:
a register (2) having an input (6) and two outputs (7), and having N/2 spaces, where N is the maximum number of bits of an OVSF code;
an exclusive OR gate (4) arranged to receive OVSF code bits from the register (2); and
a serial multiplexor (3) disposed between the output (7) of the register (2) and the input of the exclusive OR gate (4).

2. A device according to claim 1, further comprising a controller (5) connected to an input of the exclusive OR gate (4).

3. A device according to claim 2, wherein the controller (5) also controls the multiplexor (3).

4. A method of generating OVSF codes **characterized in that** it comprises the steps of:
creating an initial condition in which a root value is located in a register (2) as the least significant bit;
controlling an exclusive OR gate (4) to either feed the contents of the register (2) back into the input of the register (2), or invert the contents of the register (2) and feed it back into the input of the register (2);
storing N/2 bits of the OVSF code in the register (2), where N is the number of bits of the OVSF code; and
controlling a multiplexor (3) to serially feed the contents of the register (2) back to the exclusive OR gate (4).

5. A method according to claim 4, further controlling the multiplexor (3) to first feed back a one-bit word, then a two-bit word, then a four-bit word etc. until the appropriate OVSF code has been generated.

6. A method according to claim 4 or 5, further comprising outputting an OVSF code by serially outputting the contents of the register (2) twice.

7. A method according to claim 6, wherein, on the output of one half of the OVSF code, the bits are inverted when appropriate conditions apply.

## Patentansprüche

1. Eine Fernmeldevorrichtung, die so ausgeführt ist, dass sie mit OVSF - Codes kodierte Fernmeldesignale empfängt und dekodiert und die einen OVSF - Generator zur Erzeugung von OVSF - Codes umfasst, wobei der Codegenerator (1) **dadurch gekennzeichnet ist, dass** er folgendes umfasst:
- ein einen Eingang (6), zwei Ausgänge (7) und N/2 Räume umfassendes Register (2), wobei N die maximale Bit - Anzahl eines OVSF - Codes ist;
- ein exklusives ODER - Gatter (4) das zum Empfang von OVSF - Code - Bits vom Register (2) ausgeführt ist ; und
- einen zwischen dem Ausgang (7) des Registers (2) und dem Eingang des exklusiven ODER - Gatters (4) angeordneten seriellen Multiplexer (3).

2. Eine Vorrichtung nach Anspruch 1, die außerdem eine an den Eingang des exklusiven ODER - Gatters (4) angeschlossene Steuereinheit (5) umfasst.

3. Eine Vorrichtung nach Anspruch 2, bei der die Steuereinheit (5) auch den Multiplexer steuert.

4. Ein Verfahren zur Erzeugung von OVSF - Codes, **dadurch gekennzeichnet, dass** es folgende Schritte umfasst:
- Erzeugung einer Anfangsbedingung, bei der ein Wurzelwert in einem Register (2) als letztes aussagekräftiges Bit lokalisiert ist;
- Steuerung eines exklusiven ODER - Gatters (4), um entweder die Inhalte des Registers (2) zurück in den Eingang des Registers (2) einzuführen oder die Inhalte des Registers (2) zu invertieren und in den Eingang des Registers (2) zurückzuführen;
- Speicherung von N/2 Bits des OVSF - Codes in dem Register (2), wobei N die Bitanzahl des OVSF - Codes ist; und
- Steuerung eines Multiplexers (3), um die Inhalte des Registers (2) seriell in das exklusive ODER - Gatter zurückzuführen.

5. Ein Verfahren nach Anspruch 4, das außerdem den Multiplexer (3) steuert, um zuerst ein Einbitwort , dann ein Zweibitwort und dann ein Vierbitwort usw. zurückzuführen, bis der geeignete OVSF - Code erzeugt worden ist.

6. Ein Verfahren nach Anspruch 4 oder 5, das außerdem die Ausgabe eines OVSF - Codes durch zweimalige serielle Ausgabe der Inhalte des Registers (2) umfasst.

7. Ein Verfahren nach Anspruch 6, bei dem die Bits auf die Ausgabe einer Hälfte des OVSF - Codes invertiert werden, wenn geeignete Bedingungen gelten.

## Revendications

1. Dispositif de télécommunications prévu pour recevoir et décoder des signaux de télécommunications codés à l'aide de codes OVSF, comportant un générateur de codes OVSF (1) pour générer des codes OVSF, le générateur de codes (1) étant **caractérisé en ce qu'**il comprend :
un registre (2) comprenant une entrée (6) et deux sorties (7), et N/2 emplacements, où N est le nombre maximal de bits d'un code OVSF ;
une porte OU Exclusif (4) prévue de manière à recevoir des bits du code OVSF depuis le registre (2) ; et
un multiplexeur série (3) disposé entre la sortie (7) du registre et l'entrée de la porte OU Exclusif (4).

2. Dispositif selon la revendication 1, comprenant en outre un contrôleur (5) connecté à une entrée de la porte OU Exclusif (4).

3. Dispositif selon la revendication 2, dans lequel le contrôleur (5) commande également le multiplexeur (3).

4. Procédé pour générer des codes OVSF, **caractérisé en ce qu'**il comprend les étapes suivantes :
créer une condition initiale dans laquelle une valeur de racine est positionnée dans un registre (2) comme bit de plus faible poids ;
commander une porte OU Exclusif (4) pour soit introduire en retour le contenu du registre (2) à l'entrée du registre (2), soit inverser le contenu du registre (2) et l'introduire en retour à l'entrée du registre (2) ;
stocker N/2 bits du code OVSF dans le registre (2), où N est le nombre de bits du code OVSF ; et
commander un multiplexeur (3) de manière à introduire en retour de façon séquentielle le contenu du registre (2) à la porte OU Exclusif (4).

5. Procédé selon la revendication 4, commandant en outre le multiplexeur (3) de manière à d'abord introduire en retour un mot à un bit, puis un mot à deux bits, puis un mot à quatre bits, etc.. jusqu'à ce que le code OVSF adéquat ait été généré.

6. Procédé selon la revendication 4 ou 5, comprenant en outre l'émission d'un code OVSF par émission séquentielle du contenu du registre (2) à deux reprises.

7. Procédé selon la revendication 6, dans lequel, à l'émission d'une moitié du code OVSF, les bits sont inversés lorsque des conditions adéquates sont satisfaites.
